# FASCICULE DE BREVET EUROPEEN

(11) **EP 2 855 847 B1**
(45) Date de publication et mention de la délivrance du brevet: **18.07.2018**
(21) Numéro de dépôt: 13728469.1
(22) Date de dépôt: 23.05.2013
(51) Int. Cl.: F01D 5/14, F04D 29/32, F04D 29/66

(54) **AUBE DE SOUFFLANTE POUR TURBOREACTEUR D'AVION A PROFIL CAMBRE EN SECTIONS DE PIED**
LÜFTERSCHAUFEL FÜR EIN STRAHLTRIEBWERK EINES FLUGZEUGS MIT GEWÖLBTEM PROFIL IN DEN FUSSABSCHNITTEN
FAN BLADE FOR A TURBOJET OF AN AIRCRAFT HAVING A CAMBERED PROFILE IN THE FOOT SECTIONS

(30) Priorité: 31.05.2012 FR 1255020
(43) Date de publication de la demande: 08.04.2015
(73) Titulaire: Safran Aircraft Engines, 75015 Paris (FR)
(72) Inventeur: REISS, Hanna, F-77000 Moissy-Cramayel Cedex (FR); BISCAY, Adrien, F-77000 Moissy-Cramayel Cedex (FR); FAYARD, Benoît, F-77000 Moissy-Cramayel Cedex (FR); JABLONSKI, Laurent, F-77000 Moissy-Cramayel Cedex (FR); MERLOT, Damien, F-77000 Moissy-Cramayel Cedex (FR)
(74) Mandataire: Boura, Olivier
(86) Numéro de dépôt international: PCT/FR2013/051125
(87) Numéro de publication internationale: WO 2013/178914

(56) Documents cités:
- EP-A1- 1 452 741
- EP-A1- 2 299 124
- EP-A2- 1 927 724
- FR-A1- 2 889 861
- GB-A- 2 106 192
- US-A1- 2007 158 495

## Description

### Arrière-plan de l'invention

La présente invention se rapporte au domaine général des aubes de soufflante pour turboréacteur d'avion et concerne plus particulièrement le profil des sections de pied de telles aubes.

Les développements apportés aux turboréacteurs d'avion visent principalement à obtenir des gains en termes de performance et de masse. Plus précisément, dans le cadre de turboréacteurs de petits diamètres, il est connu que des gains en masse peuvent être obtenus au niveau de leur soufflante en réduisant le nombre d'aubes de celle-ci, en augmentant le pas relatif en tête des aubes, et en diminuant le rapport de moyeu de la soufflante.

En particulier, un faible rapport de moyeu permet d'augmenter le débit spécifique du moteur (à même diamètre de soufflante), et donc sa poussée sans pour autant pénaliser la masse. Toutefois, la diminution du rapport de moyeu conduit à abaisser le premier mode de flexion des aubes de la soufflante (appelé mode 1F). Or, la coïncidence du mode 1F et du premier harmonique du moteur engendre un comportement vibratoire instable des aubes pouvant entraîner leur fissuration.

Pour résoudre ce problème de l'abaissement du mode 1F des aubes, il est possible d'augmenter, soit leur corde (c'est-à-dire la longueur du segment de droite reliant le bord d'attaque au bord de fuite des aubes), soit l'épaisseur de leur section de pied.

Toutefois, aucune de ces solutions n'apparaît satisfaisante. L'augmentation de la corde des aubes conduit en particulier à augmenter la longueur et la masse du turboréacteur. De même, l'épaississement des sections de pied des aubes conduit à augmenter significativement la masse de la soufflante, et donc celle du turboréacteur. Cette solution présente également comme inconvénients de pénaliser les performances du turboréacteur et d'engendrer un risque de blocage en pied de soufflante. GB 2,106,192 et US 2007/158495 divulguent une aube selon le préambule de la revendication 1.

### Objet et résumé de l'invention

Il existe donc un besoin de pouvoir disposer d'une géométrie d'aube de soufflante permettant d'obtenir un abaissement de son premier mode de flexion sans pour autant augmenter la masse et la longueur du turboréacteur.

Ce but est atteint grâce à une aube de soufflante pour turboréacteur d'avion, comprenant une pale s'étendant axialement entre un bord d'attaque et un bord de fuite et comprenant une pluralité de sections de pale empilées radialement entre une section de pied et une section de tête, et dans laquelle, conformément à l'invention, toutes les sections de pale comprises entre la section de pied et une section de pale située à une hauteur radiale correspondant à 30% de la hauteur radiale totale de la pale possèdent une courbe de squelette ayant un point d'inflexion.

La courbe de squelette d'une section de pale est constituée par les variations de l'angle de squelette en fonction de la position le long de la corde de l'aube. Plus précisément, par angle de squelette, on entend l'angle formé entre la tangente à chaque point du squelette de l'aube avec l'axe moteur.

Les inventeurs ont constaté que, de manière remarquable, la présence d'un point d'inflexion au niveau des courbes squelette pour toutes les sections de pale situées entre 0% et 30% de la hauteur radiale totale de la pale permet d'augmenter le mode 1F de l'aube sans pour autant dégrader les performances aérodynamiques de l'aube. De plus, ce raidissement de la pale de l'aube s'effectue sans avoir à augmenter la corde de l'aube ou l'épaisseur de sa section de pied.

De préférence, les points d'inflexion des courbes de squelette des sections de pale comprises entre la section de pied et une section de pale située à une hauteur radiale correspondant à 30% de la hauteur radiale totale de la pale sont situés entre 25% et 75% de la longueur de corde de l'aube mesurée depuis le bord d'attaque vers le bord de fuite.

De préférence également, ces points d'inflexion sont situés entre 40% et 50% de la longueur de corde de l'aube mesurée depuis le bord d'attaque vers le bord de fuite.

De préférence encore, la pente de la tangente au point d'inflexion de la courbe de squelette diminue continument entre la section de pied et la section pale située à une hauteur radiale correspondant à 30% de la hauteur radiale totale de la pale.

L'invention concerne aussi une soufflante de turboréacteur d'avion comprenant une pluralité d'aubes telles que définies précédemment. Elle concerne encore un turboréacteur d'avion ayant une telle soufflante.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en coupe longitudinale d'une soufflante de turboréacteur munie d'aubes selon l'invention ;
- la figure 2 est une vue d'une section de pale d'une aube conforme à l'invention ;
- la figure 3 montre un exemple de courbe de squelette de sections de pale d'une aube conforme à l'invention ; et
- la figure 4 illustre les impacts sur l'écoulement aérodynamique d'un profil d'aube selon l'invention.

### Description détaillée de l'invention

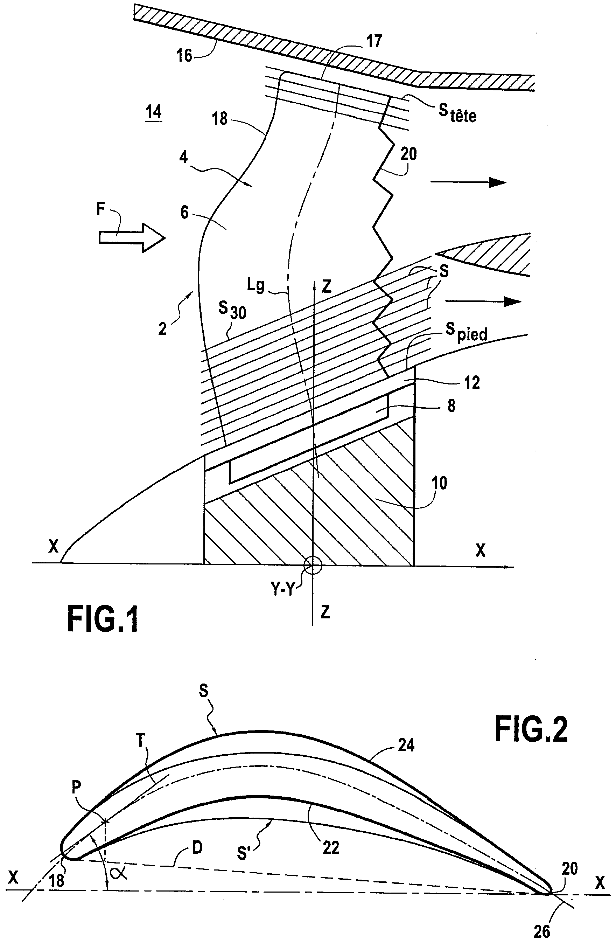

L'invention s'applique à toute soufflante d'un turboréacteur d'avion, et notamment aux soufflantes de turboréacteurs à petits diamètres telles que celle illustrée sur la figure 1.

Sur cette figure 1, est représentée une soufflante 2 de turboréacteur comprenant une pluralité d'aubes 4 conformes à l'invention qui sont régulièrement espacées les unes des autres autour de l'axe longitudinal X-X du turboréacteur, cet axe X-X étant orienté dans le sens F d'écoulement du flux d'air traversant la soufflante.

Les aubes 4 de la soufflante sont de préférence réalisées dans un alliage métallique. Chaque aube 4 comprend une pale 6 et un pied 8 monté sur un disque (ou moyeu) 10 entraîné en rotation autour de l'axe longitudinal X-X du turboréacteur. Chaque aube peut comprendre également une plateforme 12 qui forme en partie la paroi interne délimitant à l'intérieur la veine d'écoulement 14 du flux d'air F traversant la soufflante. Une paroi 16 d'un carter entourant la soufflante forme la paroi externe qui délimite à l'extérieur cette même veine d'écoulement.

Pour la suite de la description, pour chaque aube 4, on définit un axe radial Z-Z comme étant perpendiculaire à l'axe longitudinal X-X et passant par le centre de gravité de la coupe résultant de l'intersection de l'aube avec la paroi interne de la veine d'écoulement du flux d'air froid. Un axe tangentiel Y-Y forme un trièdre orthonormé direct avec les axes X-X et Z-Z.

Comme représenté sur la figure 1, la pale 6 de l'aube 4 comporte une pluralité de sections de pale S dont les centres de gravité s'empilent suivant une ligne des centres de gravité L_{g}.

Les sections de pale S sont situées à des distances radiales croissantes de l'axe longitudinal X-X et sont délimitées selon l'axe radial Z-Z entre une section de pied S_{pied} et une section de tête S_{tête} au niveau du sommet 17 de l'aube. La section de pied S_{pied} est située à 0% de la hauteur radiale totale de la pale mesurée depuis le pied de l'aube vers son sommet. De même, la section de tête S_{tête} est située à 100% de la hauteur radiale totale de la pale mesurée depuis le pied de l'aube vers son sommet.

L'empilement qui en résulte forme une surface aérodynamique qui s'étend selon l'axe longitudinal X-X entre un bord d'attaque 18 et un bord de fuite 20 et selon l'axe tangentiel Y-Y entre une face intrados 22 et une face extrados 24 (figure 2).

Conformément à l'invention, il est prévu de donner un profil cambré à toutes les sections de pale situées entre la section de pied S_{pied} et une section de pale S₃₀ située à 30% de la hauteur radiale totale de la pale mesurée depuis le pied de l'aube vers son sommet.

La figure 2 illustre un profil de section de pale S qui est cambré conformément à l'invention par rapport à un profil de section de pale S' de l'art antérieur (c'est-à-dire non cambré).

La cambrure accentuée d'une section de pale se définit par la présence d'un point d'inflexion I sur la courbe de squelette de la section de pale en question (on parle également de courbe squelette « en S »). Selon l'invention, toutes les sections de pale situées entre la section de pied S_{pied} et la section de pale S₃₀ présentent des courbes de squelette ayant un point d'inflexion.

Par « courbe de squelette d'une section de pale », on entend ici les variations, pour une section de pale donnée, de l'angle de squelette a en fonction de la position le long de la corde D de l'aube (c'est-à-dire le long du segment de droite reliant le bord d'attaque 18 au bord de fuite 20 de la section de pale correspondante).

Comme représenté sur la figure 2, l'angle de squelette α est formé entre la tangente T à chaque point P du squelette 26 de l'aube et l'axe longitudinal X-X du turboréacteur (le squelette 26 de l'aube étant la ligne géométrique des points situés à égale distance des faces latérales intrados 22 et extrados 24 de l'aube).

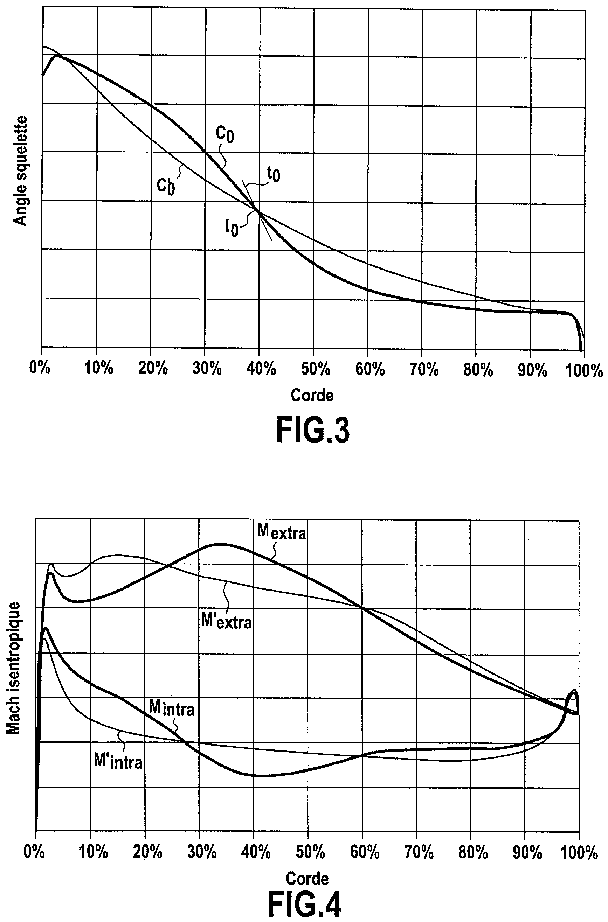

Les variations de cet angle de squelette le long de la corde D de l'aube forment ainsi une courbe appelée courbe de squelette. Les figures 3 et 4 représentent différents exemples de courbes de squelette pour différentes sections de pale d'une aube conforme à l'invention.

Ainsi, la figure 3 représente une courbe de squelette C₀ pour la section de pied (c'est-à-dire la section de pale située à 0% de la hauteur radiale totale de la pale) d'une aube conforme à l'invention en fonction d'un pourcentage de la corde de l'aube (0% de la corde correspondant au bord d'attaque et 100% à son bord de fuite). En comparaison, est également représentée sur cette figure 3 une courbe de squelette C'₀ pour la section de pied d'une aube de l'art antérieur (c'est-à-dire dont le profil des sections de pied n'est pas cambré).

Sur cette figure 3, on constate que la courbe de squelette C₀ présente bien un point d'inflexion I₀ (c'est-à-dire un point où la tangente t₀ à la courbe traverse la courbe). En comparaison, la courbe de squelette C'₀ pour la section de pied d'une aube de l'art antérieur ne présente aucun point d'inflexion.

De façon avantageuse, les points d'inflexion I de toutes les courbes de squelette des sections de pale situées entre la section de pied S_{pied} et la section de pale S₃₀, et en particulier le point d'inflexion I₀, sont positionnés entre 25% et 75% de la longueur de corde de l'aube mesurée depuis le bord d'attaque vers le bord de fuite.

De préférence, ces points d'inflexion sont positionnés entre 40% et 50% de la longueur de corde de l'aube. Ainsi, sur l'exemple de la figure 3, le point d'inflexion I₀ pour la section de pied est situé à environ 40% de la longueur de la corde.

Par ailleurs, selon une autre disposition avantageuse, la pente de la tangente au point d'inflexion de la courbe de squelette diminue continument entre la section de pied S_{pied} et la section pale S₃₀ située à 30% de la hauteur radiale totale de la pale.

Cette diminution de la pente de la tangente au point d'inflexion de la courbe de squelette est continue et ininterrompue entre la section de pied S_{pied} et la section de pale S₃₀. Au-delà la section de pale S₃₀, les courbes de squelette des sections de pale reprennent une allure classique, c'est-à-dire qu'elles ne présentent plus de point d'inflexion dans la zone indiquée.

Les inventeurs ont constaté que, de manière remarquable, la présence d'un profil cambré au niveau de toutes les sections de pale situées entre la section de pied S_{pied} et une section de pale S₃₀ permet d'augmenter le mode 1F de l'aube sans pour autant dégrader l'écoulement aérodynamique de celle-ci.

La figure 4 illustre un tel avantage. Sur cette figure sont représentées des courbes représentatives des répartitions intrados (courbe Mᵢₙₜᵣₐ) et extrados (courbe Mₑₓₜᵣₐ) de Mach isentropique pour une aube conforme à l'invention et pour une aube selon l'art antérieur (courbes M'ᵢₙₜᵣₐ et M'ₑₓₜᵣₐ).

L'analyse de ces courbes représentatives de l'écoulement aérodynamique de ces aubes montre que le Mach isentropique extrados (courbe Mₑₓₜᵣₐ) est acceptable. En particulier, son niveau est équivalent à celui d'une aube selon l'art antérieur (courbe M'ₑₓₜᵣₐ).

## Revendications

1. Aube (4) de soufflante pour turboréacteur d'avion, comprenant une pale (6) s'étendant axialement entre un bord d'attaque (18) et un bord de fuite (20) et comprenant une pluralité de sections de pale (S) empilées radialement entre une section de pied (S_{pied}) et une section de tête (S_{tête}), **caractérisée en ce que** toutes les sections de pale comprises entre la section de pied (S_{pied}) et une section de pale (S₃₀) située à une hauteur radiale correspondant à 30% de la hauteur radiale totale de la pale possèdent une courbe de squelette ayant un point d'inflexion, la courbe de squelette d'une section de pale étant constituée par les variations de l'anale de squelette en fonction de la position le long de la corde de l'aube.

2. Aube selon la revendication 1, dans laquelle les points d'inflexion des courbes de squelette des sections de pale comprises entre la section de pied et une section de pale située à une hauteur radiale correspondant à 30% de la hauteur radiale totale de la pale sont situés entre 25% et 75% de la longueur de corde de l'aube mesurée depuis le bord d'attaque vers le bord de fuite.

3. Aube selon la revendication 2, dans laquelle les points d'inflexion des courbes de squelette des sections de pale comprises entre la section de pied et une section de pale située à une hauteur radiale correspondant à 30% de la hauteur radiale totale de la pale sont situés entre 40% et 50% de la longueur de corde de l'aube mesurée depuis le bord d'attaque vers le bord de fuite.

4. Aube selon l'une quelconque des revendications 1 à 3, dans laquelle la pente de la tangente au point d'inflexion de la courbe de squelette diminue continument entre la section de pied et la section pale située à une hauteur radiale correspondant à 30% de la hauteur radiale totale de la pale.

5. Aube selon l'une quelconque des revendications 1 à 4, dans laquelle la pale est métallique.

6. Soufflante (2) de turboréacteur d'avion comprenant une pluralité d'aubes (4) selon l'une quelconque des revendications 1 à 5.

7. Turboréacteur d'avion comprenant une soufflante (2) selon la revendication 6.

## Patentansprüche

1. Gebläseschaufel (4) für ein Turbostrahltriebwerk eines Flugzeuges, umfassend ein Blatt (6), das sich zwischen einer Eintrittskante (18) und einer Austrittskante (20) axial erstreckt und das eine Vielzahl von Blattabschnitten (S) umfasst, die zwischen einem Fußabschnitt (S_{pied}) und einem Kopfabschnitt (S_{tête}) radial gestapelt sind, **dadurch gekennzeichnet, dass** alle Blattabschnitte zwischen dem Fußabschnitt (S_{pied}) und einem Blattabschnitt (S₃₀), welcher in einer radialen Höhe, die 30 % der radialen Gesamthöhe des Blattes entspricht, gelegen ist, eine Skelettlinienkrümmung mit einem Knickpunkt besitzen, wobei die Skelettlinienkrümmung eines Blattabschnittes durch die Änderungen des Skelettlinienwinkels in Abhängigkeit von der Position entlang der Sehne der Schaufel gebildet ist.

2. Schaufel nach Anspruch 1, bei der die Knickpunkte der Skelettlinienkrümmungen der Blattabschnitte zwischen dem Fußabschnitt und einem Blattabschnitt, welcher in einer radialen Höhe, die 30 % der radialen Gesamthöhe des Blattes entspricht, gelegen ist, zwischen 25 % und 75 % der Sehnenlänge der Schaufel, gemessen von der Eintrittskante zur Austrittskante, gelegen sind.

3. Schaufel nach Anspruch 2, bei der die Knickpunkte der Skelettlinienkrümmungen der Blattabschnitte zwischen dem Fußabschnitt und einem Blattabschnitt, welcher in einer radialen Höhe, die 30 % der radialen Gesamthöhe des Blattes entspricht, gelegen ist, zwischen 40 % und 50 % der Sehnenlänge der Schaufel, gemessen von der Eintrittskante zur Austrittskante, gelegen sind.

4. Schaufel nach einem der Ansprüche 1 bis 3, bei der die Neigung der Tangente an den Knickpunkt der Skelettlinienkrümmung zwischen dem Fußabschnitt und dem Blattabschnitt, welcher in einer radialen Höhe, die 30 % der radialen Gesamthöhe des Blattes entspricht, gelegen ist, kontinuierlich abnimmt.

5. Schaufel nach einem der Ansprüche 1 bis 4, bei der das Blatt metallisch ist.

6. Gebläse (2) eines Turbostrahltriebwerks eines Flugzeuges, umfassend eine Vielzahl von Schaufeln (4) nach einem der Ansprüche 1 bis 5.

7. Turbostrahltriebwerk eines Flugzeuges, umfassend ein Gebläse (2) nach Anspruch 6.

## Claims

1. A fan blade (4) for an airplane turbojet, the blade comprising an airfoil (6) extending axially between a leading edge (18) and a trailing edge (20) and having a plurality of airfoil sections (S) stacked radially between a root section (Sᵣₒₒₜ) and a tip section (Sₜᵢₚ), the blade being **characterized in that** all of the airfoil sections situated between the root section (Sᵣₒₒₜ) and an airfoil section (S₃₀) situated at a radial height corresponding to 30% of the total radial height of the airfoil possess a skeleton curve having a point of inflection, the skeleton curve for a given airfoil section comprising the variations in the skeleton angle as a function of position along the chord of the blade.

2. A blade according to claim 1, wherein the points of inflection of the skeleton curves of airfoil sections lying between the root section and an airfoil section situated at a radial height corresponding to 30% of the total radial height of the airfoil are situated in the range 25% to 75% of the chord length of the blade as measured from the leading edge going towards the trailing edge.

3. A blade according to claim 2, wherein the points of inflection of the skeleton curves of airfoil sections lying between the root section and an airfoil section situated at a radial height corresponding to 30% of the total radial height of the airfoil are situated in the range 40% to 50% of the chord length of the blade as measured from the leading edge going towards the trailing edge.

4. A blade according to any one of claims 1 to 3, wherein the slope of the tangent at the point of inflection of the skeleton curve decreases continuously between the root section and the airfoil section situated at a radial height corresponding to 30% of the total radial height of the airfoil.

5. A blade according to any one of claims 1 to 4, wherein the airfoil is made of metal.

6. An airplane turbojet fan (2) including a plurality of blades (4) according to any one of claims 1 to 5.

7. An airplane turbojet including a fan (2) according to claim 6.
